# EUROPEAN PATENT APPLICATION

(11) **EP 4 620 821 A1**
(43) Date of publication of application: **24.09.2025**
(21) Application number: 25164071.0
(22) Date of filing: 17.03.2025
(51) Int. Cl.: B64D 33/08, B60L 58/26

(54) **AIRCRAFT SYSTEM HAVING A THERMAL MANAGEMENT SYSTEM FOR AN ELECTRIFIED POWERTRAIN**

(30) Priority: 18.03.2024 US 202418607648
(71) Applicant: General Electric Company, Cincinnati, Ohio 45215 (US); GE Aerospace Poland Sp. z o.o., 02-256 Warsaw (PL)
(72) Inventor: GAJEWSKI, Adam Jan, 02-256 Warsaw (PL); DO, Kevin Michael, Cincinnati, 45241 (US)
(74) Representative: Openshaw & Co.

(57) **Abstract**

An aircraft system (101) includes an electrified powertrain (302) having a first power module (312) and a second power module (314). The aircraft system (101) further includes a thermal management system (300) having a thermal fluid loop (332) for conveying a thermal fluid. The first power module (312) and the second power module (314) are in thermal communication with the thermal fluid loop (332). The thermal management system (300) further includes a heat exchanger (334) in thermal communication with the thermal fluid loop (332) upstream of the first power module (312) and the second power module (314) such that the thermal fluid from the heat exchanger (334) is partitioned between the first power module (312) and the second power module (314).

## Description

### FIELD

The present disclosure relates to an aircraft system having a thermal management system, and a method of controlling the same.

### BACKGROUND

A conventional commercial aircraft generally includes a fuselage, a pair of wings, and a propulsion system that produces thrust. Such propulsion systems typically include at least two aircraft engines, such as turbofan jet engines. Each turbofan jet engine is typically mounted to one of the wings of the aircraft, such as in a suspended position beneath the wing separated from the wing and fuselage.

Hybrid electric propulsion systems are being developed to improve the efficiency of such conventional commercial aircraft. Hybrid electric propulsion systems typically include one or more propulsors. A propulsor can include an electric machine operatively coupled with an aircraft engine, for example. While many advances have been achieved, further efficiency improvements and integrated solutions for propulsors of hybrid electric propulsion systems are desirable.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 provides a schematic top view of an aircraft according to various exemplary embodiments of the present disclosure.
FIG. 2 provides a schematic view of a gas turbine engine in accordance with an exemplary aspect of the present disclosure.
FIG. 3 illustrates a schematic view of an aircraft having an aircraft system in accordance with embodiments of the present disclosure.
FIG. 4 illustrates a schematic view of an aircraft having an aircraft system in accordance with embodiments of the present disclosure.
FIG. 5 illustrates a schematic view of an aircraft system in accordance with embodiments of the present disclosure.
FIG. 6 illustrates a schematic view of an aircraft system in accordance with embodiments of the present disclosure.
FIG. 7 illustrates a schematic view of an aircraft system in accordance with embodiments of the present disclosure.
FIG. 8 illustrates a block diagram of a computing system in accordance with exemplary aspects of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

As used herein, the terms "first", "second", and "third" may be used interchangeably to distinguish one component from another and are not intended to signify location or importance of the individual components.

As used herein, the term "line" may refer to a pipe, hose, tube, or other fluid carrying conduit.

The present disclosure is generally related to an aircraft system having an electrified powertrain and a thermal management system capable of managing a thermal load of the power modules (e.g., batteries, inverters, converters, etc.) in the electrified powertrain across a variety of operating conditions through the use of a thermal fluid loop. The thermal management system of the present disclosure is configured to thermally manage the temperature of the power modules associated with two different electric machines simultaneously by configuring the thermal fluid loop in a parallel branch design and by positioning one or more heat exchangers on the thermal fluid loop. Additionally, the thermal management system may advantageously include a thermal controller that maintains a desired operating temperature of the various power modules by adjusting an amount of coolant provided to the one or more heat exchangers and/or by adjusting the operation of one or more devices fluidly/thermally coupled to the thermal fluid loop (such as a variable speed coolant pump, a heater, etc.).

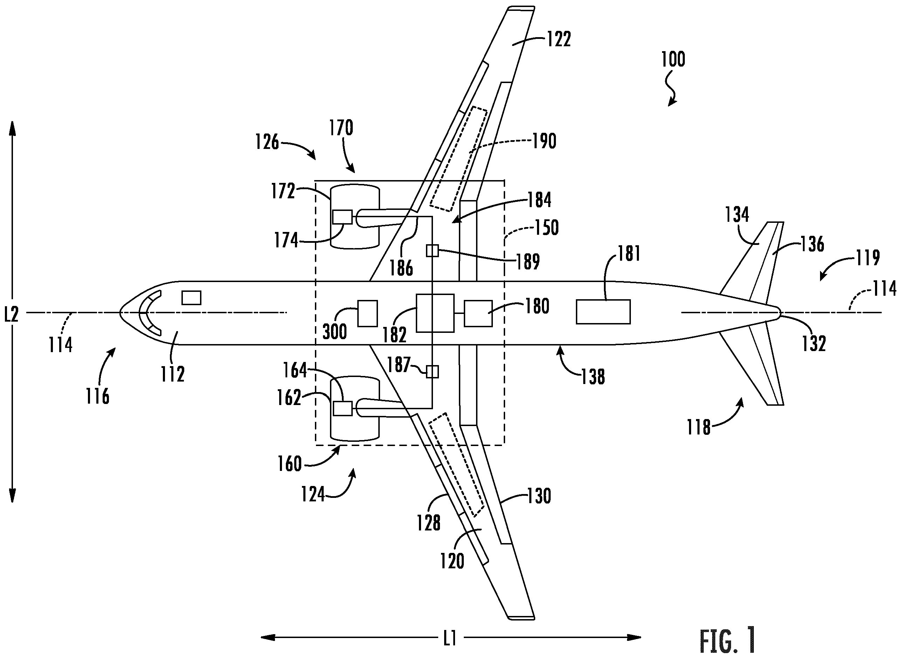

Referring now to the drawings, wherein identical numerals indicate the same elements throughout the figures, FIG. 1 provides a schematic top view of an exemplary aircraft 100 as may incorporate various embodiments of the present disclosure. As shown in FIG. 1, for reference, the aircraft 100 defines a longitudinal direction L1 and a lateral direction L2. The aircraft 100 also defines a longitudinal centerline 114 that extends therethrough along the longitudinal direction L1. The aircraft 100 extends between a forward end 116 and an aft end 118, e.g., along the longitudinal direction L1. Moreover, the aircraft 100 includes a fuselage 102 that extends longitudinally from the forward end 116 of the aircraft 100 to the aft end 118 of the aircraft 100. The aircraft 100 also includes an empennage 119 at the aft end 118 of the aircraft 100. In addition, the aircraft 100 includes a wing assembly including a first, port side wing 120 and a second, starboard side wing 122. The first and second wings 120, 122 each extend laterally outward with respect to the longitudinal centerline 114. The first wing 120 and a portion of the fuselage 102 together define a first side 124 of the aircraft 100 and the second wing 122 and another portion of the fuselage 102 together define a second side 126 of the aircraft 100. For the embodiment depicted, the first side 124 of the aircraft 100 is configured as the port side of the aircraft 100 and the second side 126 of the aircraft 100 is configured as the starboard side of the aircraft 100.

The aircraft 100 includes various control surfaces. For this embodiment, each wing 120, 122 includes one or more leading edge flaps 128 and one or more trailing edge flaps 130. The aircraft 100 further includes, or more specifically, the empennage 119 of the aircraft 100 includes a vertical stabilizer 132 having a rudder flap (not shown) for yaw control and a pair of horizontal stabilizers 134 each having an elevator flap 136 for pitch control. The fuselage 102 additionally includes an outer surface or skin 138. It should be appreciated that in other exemplary embodiments of the present disclosure, the aircraft 100 may additionally or alternatively include any other suitable configuration. For example, in other embodiments, the aircraft 100 may include any other control surface configuration.

The exemplary aircraft 100 of FIG. 1 also includes a hybrid-electric propulsion system 150. For this embodiment, the hybrid-electric propulsion system 150 has a first propulsor 160 and a second propulsor 170 both operable to produce thrust. The first propulsor 160 is mounted to the first wing 120 and the second propulsor 170 is mounted to the second wing 122. Moreover, for the embodiment depicted, the first propulsor 160 and second propulsor 170 are each configured in an underwing-mounted configuration. However, in other example embodiments, one or both of the first and second propulsors 160, 170 may in other exemplary embodiments be mounted at any other suitable location.

The first propulsor 160 includes a gas turbine engine 162 and an electric machine 164 operatively coupled with the gas turbine engine 162. The electric machine 164 can be an electric generator, an electric motor, or a combination generator/motor. For this example embodiment, the electric machine 164 is a combination generator/motor. In this manner, when operating as an electric generator, the electric machine 164 can generate electrical power when driven by the gas turbine engine 162. When operating as an electric motor, the electric machine 164 can drive or motor a fan spool of the gas turbine engine 162. Moreover, for this example embodiment, the gas turbine engine 162 is configured as a turbofan, and thus, the first propulsor 160 is configured as a hybrid electric turbofan.

Likewise, the second propulsor 170 includes a gas turbine engine 172 and an electric machine 174 operatively coupled with the gas turbine engine 172. The electric machine 174 can be an electric generator, an electric motor, or a combination generator/motor. For this example embodiment, the electric machine 174 is a combination generator/motor. In this manner, when operating as an electric generator, the electric machine 174 can generate electrical power when driven by the gas turbine engine 172. When operating as an electric motor, the electric machine 174 can drive or motor a fan spool of the gas turbine engine 172. Furthermore, for this example embodiment, the gas turbine engine 172 is configured as a turbofan, and thus, the second propulsor 170 is configured as a hybrid electric turbofan.

The hybrid-electric propulsion system 150 further includes an electric power source 180 electrically connectable to the electric machines 164, 174, and in some embodiments, other electrical loads. The electric power source 180 may be configured as an electric energy storage unit (e.g., one or more batteries, such as one or more lithium-ion batteries, or alternatively may be configured as any other suitable electrical energy storage devices, such as supercapacitors), as one or more fuel cells (e.g., one or more proton electron membrane fuel cells and/or solid oxide fuel cells), etc. Notably, when the electric power source 180 is one or more fuel cells, the hybrid-electric propulsion system 150 may further include a separate fuel storage tank 181 containing fuel (e.g., liquid and/or gaseous hydrogen, methane, etc.) for the one or more fuel cells.

The hybrid-electric propulsion system 150 also includes a power management system having a controller 182 and a power bus 184. The electric machines 164, 174, the electric energy storage unit 180, and the controller 182 are each electrically connectable to one another through one or more electric lines 186 of the power bus 184. For instance, the power bus 184 may include various switches or other power electronics movable to selectively electrically connect the various components of the hybrid-electric propulsion system 150.

Additionally, the power bus 184 may further include power modules, such as a first group of power modules 187 associated with the first electric machine 164 and a second group of power modules 189 associated with the second electric machine 174. The power modules may include but are not limited to inverters, converters, rectifiers, batteries, etc., for conditioning, converting, and/or providing electrical power within the hybrid-electric propulsion system 150. In exemplary embodiments, the hybrid-electric propulsion system 150 may further include a thermal management system 300 in thermal communication with one or more components of the hybrid-electric propulsion system 150. Particularly, the thermal management system 300 may be in thermal communication with the electric machines 164, 174, the power modules 187, 189, the electric power source 180, and/or the controller 182 for regulating the temperature of the various components in the hybrid-electric propulsion system 150.

The controller 182 is configured to distribute electrical power between the various components of the hybrid-electric propulsion system 150. For example, the controller 182 may control the power electronics of the power bus 184 to provide electrical power to, or draw electrical power from, the various components, such as the electric machines 164, 174, to operate the hybrid-electric propulsion system 150 between various operating modes and perform various functions. Such is depicted schematically as the electric lines 186 of the power bus 184 extend through the controller 182.

Referring still to FIG. 1, as is shown schematically, it will be appreciated that the aircraft 100 further includes a fuel system having a fuel tank 190 located in each of the first wing 120 and second wing 122 and, although not depicted, a fuel delivery system fluidly connecting the fuel tanks 190 to the gas turbine engines 162, 172.

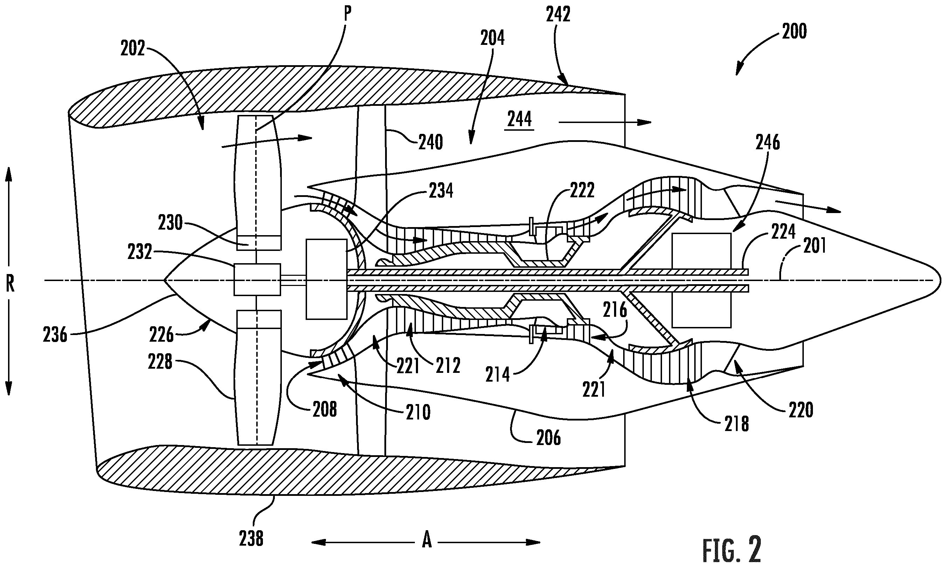

Referring now to FIG. 2, a schematic cross-sectional view of a gas turbine engine 200 in accordance with an exemplary embodiment of the present disclosure is provided. In certain exemplary embodiments, the propulsion engine may be configured a hybrid-electric propulsion engine. In various embodiments, the gas turbine engine 200 may be representative of the propulsors 160, 170 in the hybrid-electric propulsion system 150 described above with reference to FIG. 1.

As shown in FIG. 2, the gas turbine engine 200 defines an axial direction A (extending parallel to a longitudinal centerline 201 provided for reference), a radial direction R, and a circumferential direction C (extending about the axial direction A; not depicted in FIG. 2). In general, the gas turbine engine 200 includes a fan section 202 and a core turbine engine 204 disposed downstream from the fan section 202.

The exemplary core turbine engine 204 depicted generally includes a substantially tubular outer casing 206 that defines an annular inlet 208. The outer casing 206 encases, in serial flow relationship, a compressor section including a booster or low pressure (LP) compressor 210 and a high pressure (HP) compressor 212; a combustion section 214; a turbine section including a high pressure (HP) turbine 216 and a low pressure (LP) turbine 218; and a jet exhaust nozzle section 220. The compressor section, combustion section 214, and turbine section together define a core air flowpath 221 extending from the annular inlet 208 through the LP compressor 210, HP compressor 212, combustion section 214, HP turbine section 216, LP turbine section 218 and jet nozzle exhaust section 220. A high pressure (HP) shaft or spool 222 drivingly connects the HP turbine 216 to the HP compressor 212. A low pressure (LP) shaft or spool 224 drivingly connects the LP turbine 218 to the LP compressor 210.

For the embodiment depicted, the fan section 202 includes a variable pitch fan 226 having a plurality of fan blades 228 coupled to a disk 230 in a spaced apart manner. As depicted, the fan blades 228 extend outwardly from disk 230 generally along the radial direction R. Each fan blade 228 is rotatable relative to the disk 230 about a pitch axis P by virtue of the fan blades 228 being operatively coupled to a suitable actuation member 232 configured to collectively vary the pitch of the fan blades 228 in unison. The fan blades 228, disk 230, and actuation member 232 are together rotatable about the longitudinal axis 12 by LP shaft 224 across a power gear box 234. The power gear box 234 includes a plurality of gears for stepping down the rotational speed of the LP shaft 224 to a more efficient rotational fan speed.

Referring still to the exemplary embodiment of FIG. 2, the disk 230 is covered by rotatable front hub 236 aerodynamically contoured to promote an airflow through the plurality of fan blades 228. Additionally, the exemplary fan section 202 includes an annular fan casing or outer nacelle 238 that circumferentially surrounds the fan 226 and/or at least a portion of the core turbine engine 204. The nacelle 238 is supported relative to the core turbine engine 204 by a plurality of circumferentially-spaced outlet guide vanes 240. A downstream section 242 of the nacelle 238 extends over an outer portion of the core turbine engine 204 so as to define a bypass airflow passage 244 therebetween.

Also provided in FIG. 2 is a portion of an electrified powertrain or electric drive assembly, which may include an electric machine 246. The electric machine 246 is operatively coupled with the gas turbine engine 200 for, e.g., adding power to the gas turbine engine 200, extracting power from the gas turbine engine 200, or both. The electric machine 246 is depicted embedded within the gas turbine engine 200 at a location inward of the working gas flowpath 237. However, in other exemplary embodiments, the electric drive assembly may additionally or alternatively include an electric machine in an under-cowl location (e.g., underneath the outer casing 206 and outward of the working gas flowpath 237), or at any other suitable location.

The electric machine 246 may be rotatable with the fan 226. Specifically, for the embodiment depicted, the electric machine 246 is configured as an electric generator, an electric motor, or both. The electric machine 246 may be co-axially mounted to and rotatable with the LP shaft 224 (the LP shaft 224 also rotating the fan 226 through, for the embodiment depicted, the power gear box 234). However, in other exemplary embodiments, the electric drive assembly may additionally or alternatively include an electric machine in an under-cowl location (e.g., underneath the outer casing 206 and outward of the working gas flowpath), or at any other suitable location.

It should be appreciated, however, that the exemplary gas turbine engine 200 depicted in FIG. 2 is by way of example only, and that in other exemplary embodiments, the gas turbine engine 200 may have any other suitable configuration. For example, although the gas turbine engine 200 depicted is configured as a ducted gas turbine engine (i.e., including the outer nacelle 250), in other embodiments, the gas turbine engine 200 may be an unducted gas turbine engine (such that the fan is an unducted fan, and the outlet guide vanes are cantilevered from the outer casing). Additionally, or alternatively, although the gas turbine engine 200 depicted is configured as a geared gas turbine engine (i.e., including the power gear box 234) and a variable pitch gas turbine engine (i.e., including a fan configured as a variable pitch fan), in other embodiments, the gas turbine engine 200 may additionally or alternatively be configured as a direct drive gas turbine engine (such that the LP shaft 224 rotates at the same speed as the fan 226), as a fixed pitch gas turbine engine (such that the fan 226 includes fan blades 228 that are not rotatable about a pitch axis P), or both. It should also be appreciated, that in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, a three-stream gas turbine engine, or a turbojet gas turbine engine.

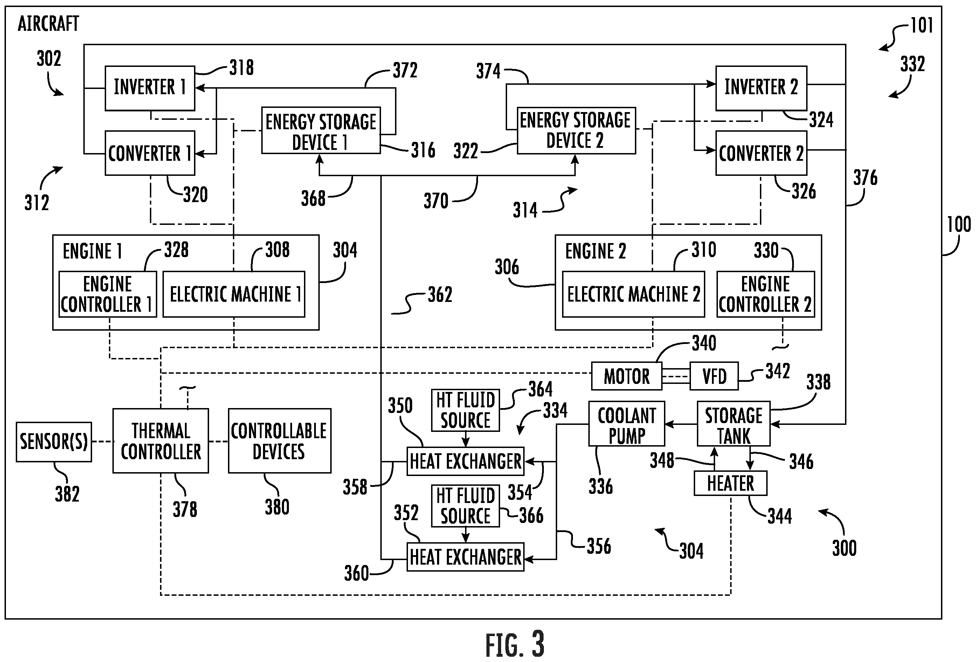

Referring now to FIG. 3, a schematic diagram of an aircraft 100 having an aircraft system 101 is illustrated in accordance with embodiments of the present disclosure. The aircraft system 101 may include an electrified powertrain 302 and a thermal management system 300. The thermal management system 300 may advantageously maintain a desired operational temperature of the various electric components in the electrified powertrain 302, which increases the efficiency of the electrified powertrain 302 and the entire aircraft 100.

As shown in FIG. 3, the aircraft 100 may include a first hybrid-electric propulsion engine 304 and a second hybrid-electric propulsion engine 306. Each of the hybrid-electric propulsion engines 304, 306 may be configured similarly or differently as the gas turbine engine 200 described above with reference to FIG. 2. In exemplary embodiments, the first hybrid-electric propulsion engine 304 may include a first electric machine 308, and the second hybrid-electric propulsion engine 306 may include a second electric machine 310. The electric machines 308, 310 may be operatively coupled with the respective hybrid-electric propulsion engines 304, 306 for adding power to engines (e.g., to produce additional thrust), extracting power from engines (e.g., to reduce thrust), or both. Additionally, as show in FIG. 3, the first hybrid electric propulsion engine 304 may include a first engine controller 328 in operable communication with the first electric machine 308, and the second hybrid electric propulsion engine 306 may include a second engine controller 330 in operable communication with the second electric machine 310. The engine controllers 328, 330 may additionally be in operable communication with the components in the electrified powertrain 302 and the thermal management system 300.

The electric machines 308, 310 may be included in the electrified powertrain 302, and each of the electric machines 308, 310 may be electrically connected to one or more power modules 312, 314. For example, the first electric machine 308 may be electrically connected to a first group of power modules 312, which support an operation of the first electric machine 308, e.g., by providing, modifying, conditioning, storing, or converting power for the first electric machine 308. Likewise, the second electric machine 310 may be electrically connected to a second group of power modules 314, which support an operation of the second electric machine 310, e.g., by providing, modifying, conditioning, storing, or converting power for the second electric machine 310. The first group of power modules 312 and the second group of power modules 314 may each be included in the electrified powertrain 302.

As shown in FIG. 3, the first group of power modules 312 may include a first energy storage device 316, a first inverter 318, and a first converter 320, which may each be electrically connected to the first electric machine 308. The first energy storage device 316 may be one or more lithium-ion batteries, or alternatively may be configured as any other suitable electrical energy storage devices, such as supercapacitors. The first energy storage device 316 may store electrical energy for selective use by the first electric machine 308. The first inverter 318 may convert direct current (DC) to alternating current (AC). In some embodiments, the first inverter 318 may be electrically disposed between the first energy storage device 316 and the first electric machine 308 to facilitate conversion of the DC power supplied by the first energy storage device 316 to AC power for operation of the electric machine 308. The first converter 320 may be a DC-DC power converter that may convert one DC voltage level to another, either higher or lower, depending on load requirements. The first power converter 320 may advantageously maintain the proper voltage level for ensuring efficient power transfer between the components in the electrified powertrain 302.

Similarly, the second group of power modules 314 may include a second energy storage device 322, a second inverter 324, and a second converter 326, which may each be electrically connected to the second electric machine 310. The second energy storage device 322 may be one or more lithium-ion batteries, or alternatively may be configured as any other suitable electrical energy storage devices, such as supercapacitors. The second energy storage device 322 may store electrical energy for selective use by the second electric machine 310. The second inverter 324 may convert direct current (DC) to alternating current (AC). In some embodiments, the second inverter 324 may be electrically disposed between the second energy storage device 322 and the second electric machine 310 to facilitate conversion of the DC power supplied by the second energy storage device 322 to AC power for operation of the second electric machine 310. The second converter 326 may be a DC-DC power converter that may convert one DC voltage level to another, either higher or lower, depending on load requirements. The second power converter 326 may advantageously maintain the proper voltage level for ensuring efficient power transfer between the components in the electrified powertrain 302.

The thermal management system 300 may include a thermal fluid loop 332 for conveying a thermal fluid. The thermal fluid loop 332 may include one or more tubes, pipes, or other fluid carrying conduits arranged in a closed loop, such that the thermal fluid continuously travels through the thermal fluid loop 332. In exemplary embodiments, the thermal fluid may be a mixture of ethylene glycol and water (e.g., about 60% ethylene glycol and about 40% water). However, in other embodiments, the thermal fluid may be any other coolant fluid.

One or more devices may be positioned on and in thermal communication with the thermal fluid loop 332 to add or remove heat from the one or more devices to the thermal fluid in the thermal fluid loop 332. As used herein, the phrase "in thermal communication on the thermal fluid loop" may be used to refer to a device or devices that are either adding or removing heat from the thermal fluid in the thermal fluid loop. For example, such devices may include localized heat exchangers coupled to the component through which the thermal fluid may flow for adding or removing heat from the devices. Particularly, each of the components in the electrified powertrain 302 (e.g., the electric machines, the inverters, the converters, the energy storage devices, etc.) may each include localized and/or integrated heat exchangers that facilitate heat transfer between the component and the thermal fluid loop 332.

The thermal management system 300 may further include one or more heat exchangers 334, a coolant pump 336, and a storage tank 338 disposed in fluid communication with the thermal fluid loop 332. The coolant pump 336 may be disposed upstream of the one or more heat exchangers 334 and downstream of the storage tank 338 with respect to the flow of thermal fluid through the thermal fluid loop 332. The coolant pump 336 may be a variable speed pump such that the coolant pump 336 includes a motor 340 with a variable frequency drive (VFD) 342. The coolant pump 336 may provide the motive force for the thermal fluid through the thermal fluid loop 332. The motor 340 and the VFD may adjust the speed of the coolant pump 336, which adjusts the speed of the thermal fluid through the thermal fluid loop 332. As will be appreciated, adjusting the velocity of the thermal fluid within the thermal fluid loop 332 may adjust the heat transfer rate between the one or more heat exchangers 334 the thermal fluid and/or between the power modules (e.g., the inverters, converters, and/or energy storage) and the thermal fluid.

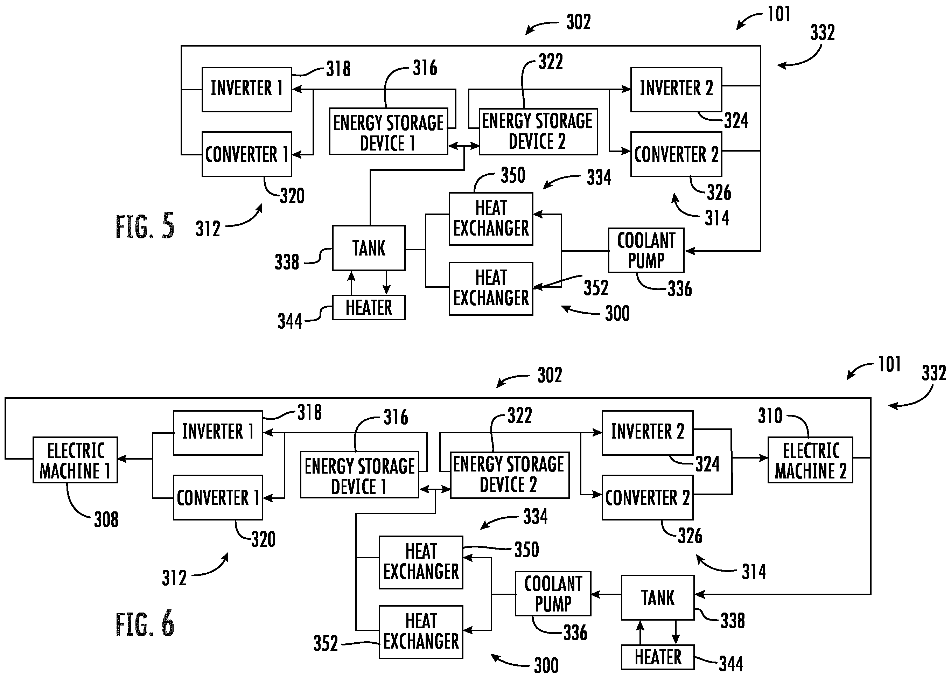

The storage tank 338 may be disposed in fluid communication on the thermal fluid loop 332. The storage tank 338 may be a tank or container that receives, houses, and transports a portion of the thermal fluid. In some embodiments, as shown in FIG. 3, the storage tank 338 may be disposed upstream of the at least one heat exchanger 334 (and/or upstream of the coolant pump 336) with respect to the flow of thermal fluid through the thermal fluid loop 332. In other embodiments, as shown in FIG. 5, the storage tank 338 may be disposed on the thermal fluid loop 332 downstream of the at least one heat exchangers 334 with respect to the flow of thermal fluid through the thermal fluid loop 332. In many embodiments, a heater 344 may be fluidly and thermally coupled to the storage tank 338 for heating a portion of the thermal fluid from the storage tank 338. The heater 344 may be an electrical resistive element heater, an internal tank immersion heater (e.g., positioned within the storage tank 338), or a fluid-fluid heat exchanger.

A heater supply line 346 may extend from the storage tank 338 to the heater 344, and a heater return line 348 extending from the heater 344 to the storage tank 338. The heater 344 may continuously, or selectively, heat a portion of the thermal fluid from the storage tank 338 (e.g., by pulling a portion of the thermal fluid from the tank with the heater supply line 346, heating the thermal fluid with the heater 344, and returning the portion of the thermal fluid back to the storage tank 338 with the heater return line 348). The portion of the thermal fluid heated by the heater 344 may be between about 5% and about 20% of the thermal fluid housed in the storage tank 338, or such as between about 5% and about 15%, or such as about 10%.

The at least one heat exchanger 334 may include a first heat exchanger 350 and a second heat exchanger 352 arranged in parallel on the thermal fluid loop 332, such that the thermal fluid in the thermal fluid loop 332 is partitioned between the first heat exchanger 350 and the second heat exchanger 352. For example, a first heat exchanger inlet line 354 of the thermal fluid loop 332 may extend (and fluidly couple) to the first heat exchanger 350, and a second heat exchanger inlet line 356 may extend (and fluidly couple) to the second heat exchanger 352. Additionally, a first heat exchanger outlet line 358 may extend from the first heat exchanger 350 to a common heat exchanger outlet line 362. Similarly, a second heat exchanger outlet line 360 may extend from the second heat exchanger 352 to the common heat exchanger outlet line 362.

Each of the one or more heat exchangers 334 may be thermally and/or fluidly coupled to a heat transfer (HT) fluid source (such as air, fuel, water, or other fluid) for transferring heat from the thermal fluid to the HT fluid from the HT fluid source. For example, the first heat exchanger 350 may be fluidly and/or thermally coupled to a first HT fluid source 364, and the second heat exchanger 352 may be fluidly and/or thermally coupled to a second HT fluid source 366. The first HT fluid source 364 and the second HT fluid source 366 may be different or the same. For example, in embodiments where one or more of the HT sources 364, 366 is an air source, one of the one or more heat exchangers 334 may be positioned in thermal communication with one or more air streams of the hybrid-electric propulsion engines 304, 306, such as a fan air stream, a third stream, exposed to overboard air, located in a core/fan/booster undercowl compartment, located in a ram air channel, or another location. In other embodiments, in which one or more of the HT sources 364, 366 is fuel source, one of the one or more heat exchangers 334 may be positioned in thermal communication with a fuel supply of the gas turbine engine (which may also be fluidly coupled to the combustion section of the gas turbine engine). In yet another embodiment, one or more of the HT sources 364, 366 may be a water supply (e.g., from a lavatory of the aircraft 100 or another water supply). In yet still further embodiments, one or more of the HT sources 364, 366 may be a dedicated heat transfer source (such as a source of refrigerant or other thermal fluid).

In exemplary embodiments, the first power module and the second power module may be in thermal communication with the thermal fluid loop 332. Particularly, the first group of power modules 312 may each be disposed in thermal communication with the thermal fluid loop 332 downstream of the one or more heat exchangers 334, such that the thermal fluid may extract heat (or add heat in some embodiments) from the first group of power modules 312. Similarly, the second group of power modules 314 may each be disposed in thermal communication with the thermal fluid loop 332 downstream of the one or more heat exchangers 334, such that the thermal fluid may extract heat (or add heat in some embodiments) from second group of power modules 314.

Each of the power modules that is thermally and/or fluidly coupled to the thermal fluid loop 332 may include a localized heat exchanger for extracting heat or adding heat to the respective power module. For example, each of the first energy storage device 316, the second energy storage device 322, the first inverter 318, the second inverter 324, the first converter 320, and the second converter 326 may include an integrated heat exchanger for extracting heat from, or adding heat to, the respective component by passing the thermal fluid from the thermal fluid loop 332 through the integrated heat exchanger.

In exemplary embodiments, the at least one heat exchanger 334 may be disposed in thermal communication with the thermal fluid loop 332 upstream of the first power module and the second power module such that the thermal fluid from the one or more heat exchanger 334 is partitioned between the first power module and the second power module. For example, a first branch line 368 and a second branch line 370 may extend from the common heat exchanger outlet line 362 to a respective power module of a respective group of power modules. That is, the first branch line 368 may extend from the common heat transfer outlet line 362 to a power module in the first group of power modules 312, and the second branch line 370 may extend from the common heat transfer outlet line 362 to a power module in the second group of power modules 314. Particularly, in the arrangement shown in FIG. 3, the first branch line 368 may extend from the common heat transfer outlet line 362 to the first energy storage device 316, and the second branch line 370 may extend from the common heat transfer outlet line 362 to the second energy storage device 322. The thermal fluid may be partitioned to provide a greater portion of the thermal fluid to the first power module to provide increased heat transfer, cooling the first power module.

In exemplary embodiments, as shown in FIG. 3, the first inverter 318 and the first converter 320 may be disposed in a parallel arrangement on the thermal fluid loop 332 downstream of the first energy storage device 316 (e.g., with respect to the flow of thermal fluid through the thermal fluid loop 332). In this way, a first portion of thermal fluid exiting the first energy storage device 316 may enter the inverter 318, and a second portion of thermal fluid exiting the first energy storage device 316 may enter the first converter 320. The first and second portions may be determined to provide specific cooling to the inverter 318 and to the first converter 320. A first outlet line 372 may extend from the first energy storage device 316. The first outlet line 372 may bifurcate into a first arm portion extending to the first inverter 318 and a second arm portion extending to the first converter 320.

Similarly, the second inverter 324 and the second converter 326 may be disposed in a parallel arrangement on the thermal fluid loop 332 downstream of the second energy storage device 322 (e.g., with respect to the flow of thermal fluid through the thermal fluid loop 332). In this way, a first portion of thermal fluid exiting the second energy storage device 322 may enter the second inverter 324, and a second portion of thermal fluid exiting the second energy storage device 322 may enter the second converter 326. A second outlet line 374 may extend from the second energy storage device 322. The second outlet line 374 may bifurcate into a first arm portion extending to the second inverter 324 and a second arm portion extending to the second converter 326.

The thermal fluid from the first inverter 318, the first converter 320, the second inverter 324, and the second converter 326 may be provided to a common return line 376. In some embodiments, as shown in FIG. 3, the common return line 376 may extend to the storage tank 338. In other embodiments, as shown in FIG. 5, the common return line 376 may extend directly to the coolant pump 336.

In various embodiments, the thermal management system 300 may further include a thermal controller 378 operably connected to the various components in the thermal management system 300 (such as the coolant pump 336, the heater 344, and one or more controllable devices 380). The thermal controller 378 may be in communication with one or more sensors 382, such as temperature sensors, pressure sensors, or other sensors, which may be positioned about the aircraft 100 and/or the hybrid-electric propulsion engines 304, 306. Additionally, the thermal controller 378 may be in operable communication with the first engine controller 328, the second engine controller 330, the first electric machine 308, and the second electric machine 310. For example, the thermal controller 378 may receive a signal indicating a future or expected load requirement of the first electric machine 308 and/or the second electric machine 310, and the thermal controller 378 may adjust an operation of one or more components in the thermal management system 300 to account for the load requirement. For example, if a load requirement increases such that the first electric machine 308 and the second electric machine 310 increase a power output to their respective engines (causing an increase in the thermal energy generated by the power modules 312, 314), the thermal controller 378 may respond by increasing the speed of the coolant pump 336, adjusting the amount of fluid to the heater 344, etc. to account for the increase in thermal demand.

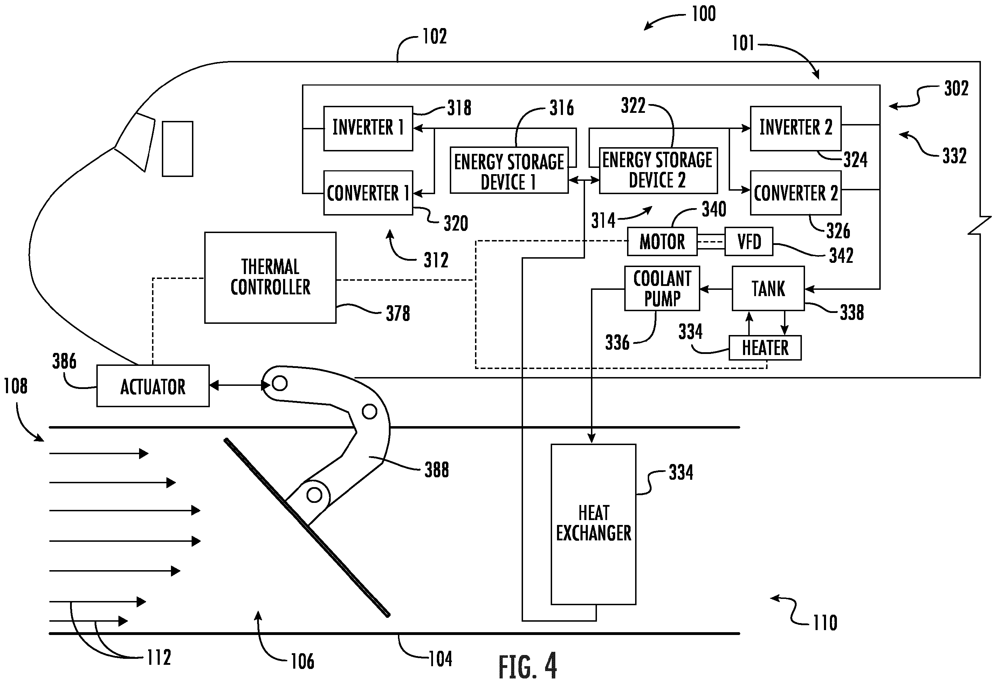

Referring now to FIG. 4, a schematic view of an aircraft 100 having the aircraft system 101 is illustrated in accordance with embodiments of the present disclosure. For example, the aircraft system 101 may include the electrified powertrain 302 and the thermal management system 300. The aircraft system 101 may be configured similarly to the aircraft system 101 discussed above with reference to FIG. 3.

As shown, the aircraft 100 may include a body or fuselage 102 and a ram air duct 104. The ram air duct 104 may define a ram air channel 106 that extends from a forward end 108 to an aft end 110. The ram air channel 106 may receive a flow of ram air 112 at the forward end 108 during operation of the aircraft 100. In many embodiments a door 384 may be positioned within the ram air channel 106 for obstructing at least a portion of the flow of ram air 112. For example, the door 384 may be connected to an actuator 386 such that the door 384 is movable between an open position and a closed position. Particularly, a hinge 388 may be pivotably coupled to the fuselage 102 at a first end and coupled to the door 384 at a second end. The hinge 388 may be coupled to the actuator 386, such that the actuator 386 may adjust a position of the door 384 by pivoting the hinge 388. In the open position, the door 384 may allow for a portion of the flow of ram air 112 to pass through the ram air channel 106 (such that the duct channel is only partially restricted by the door 384). In the closed position, all (e.g., 100%) or most (e.g., about 95%) of the ram air channel 106 may be obstructed by the door 384.

In the embodiment shown in FIG. 4, the at least one heat exchanger 334 may be positioned in the ram air channel 106 aft of the door 384 with respect to the flow of ram air 112 through the ram air channel 106, such that the thermal controller 378 may be operable to adjust a heat transfer rate between the flow of ram air 112 and the thermal fluid in the at least one heat exchanger 334 by adjusting a position of the door 384.

The operational parameters of the various components in the thermal management system 300 may be adjusted based on the load requirements of the electric machines 308, 310. For example, the thermal controller 378 may determine a load requirement of one of the first electric machine 308 and/or the second electric machine 310 (e.g., by communicating with the engine controllers 328, 330). In response to determining a load requirement of the electric machines 308, 310, the thermal controller 378 may adjust an operation of at least one the coolant pump 336, the heater 344, and/or the actuator 386. This dynamic operation of the thermal management system 300 may advantageously maintain temperature requirements of the various power modules. For example, the thermal management system 300 may maintain the energy storage devices at an operational temperature of between about 80 °F and about 90 °F. Additionally, the thermal management system 300 may maintain the inverters at an operational temperature of between about 120 °F and about 140 °F. Further, the thermal management system 300 may maintain the converters at an operational temperature of between about 120 °F and about 140 °F.

For example, when the electric machines 308, 310 are not operational, such that the groups of power modules 312, 314 are producing negligible heat load, the thermal controller 378 may move the door 384 to a closed position; operate the heater 344 to maintain a baseline temperature of the thermal fluid (e.g., to prevent frost on the components in the electrified powertrain 302); and idle the coolant pump 336 to maintain circulation of the thermal fluid in the thermal fluid loop 332.

When the electric machines 308, 320 are operating in a partial load condition (e.g., less than full capacity), then the thermal controller 378 may move the door 384 to a partially open position (such that between about 40% and about 60% of the ram air channel 106 is obstructed by the door 384); and increase the speed of the coolant pump 336 to a maximum level, such that the circulation of the thermal fluid in the thermal fluid loop 332 is increased. The heater 344 may not be operated when the electric machines 308, 320 are operating in the partial load condition.

When the electric machines 308, 320 are operating in maximum load condition (e.g., at full capacity), then the thermal controller 378 may move the door 384 to a fully open position (such that the ram air channel 106 is completely unobstructed by the door 384); and increase the speed of the coolant pump 336 to a maximum level, such that the circulation of the thermal fluid in the thermal fluid loop 332 is increased. The heater 344 may not be operated when the electric machines 308, 320 are operating in the maximum load condition.

Referring now to FIGS. 5 through 7, a schematic view of an aircraft system 101 in accordance with various alternative embodiments of the present disclosure. As should be appreciated, the features shown in FIGS. 5 through 7 may be implemented, together, separately, or in any reasonable combination, into the aircraft system 101 and the aircraft 100 described above with reference to FIGS. 3 and 4. As shown in FIG. 5, in some embodiments, the storage tank 338 may be disposed downstream of the at least one heat exchanger 334 (e.g., immediately downstream of the at least one heat exchanger 334). More particularly, as shown in FIG. 5, the storage tank 338 may be disposed on the thermal fluid loop 332 downstream of the at least one heat exchanger 334 and upstream of the first energy storage device 316 and the second energy storage device 322 with respect to the flow of thermal fluid through the thermal fluid loop 332.

As shown in FIG. 6, in many embodiments, in addition to the first group of power modules 312 and the second group of power modules 314, the electric machines 308, 310 may also be disposed in thermal communication on the thermal fluid loop 332. For example, in such embodiments, as shown, the first electric machine 308 may be disposed in thermal communication on the thermal fluid loop 332 downstream (e.g., immediately downstream) of the first inverter 318 and the first converter 320 with respect to the flow of thermal fluid through the thermal fluid loop 332. Similarly, the second electric machine 310 may be disposed in thermal communication on the thermal fluid loop 332 downstream (e.g., immediately downstream) of the second inverter 324 and the second converter 326 with respect to the flow of thermal fluid through the thermal fluid loop 332.

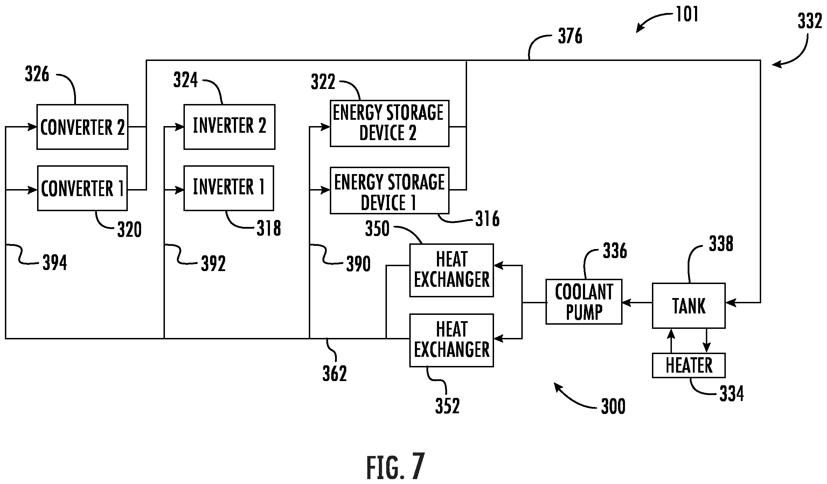

As shown in FIG. 7, in some embodiments, the converters 320, 326, the inverters 318, 324, and the energy storage devices 316, 322, may be arranged in parallel downstream of the at least one heat exchanger 334 on the thermal fluid loop 332. For example, a common heat exchanger outlet line 362 may extend from the at least one heat exchanger 334, and three branch lines 390, 392, 394 may extend from the common heat exchanger outlet line 362 to a common return line 376. For example, a first branch line 390 may extend from the common heat exchanger outlet line 362 to the common return line 376. A second branch line 392 may extend from the common heat exchanger outlet line 362 to the common return line 376 downstream of the first branch line 390. A third branch line 394 may extend from the common heat exchanger outlet line 362 to the common return line 376 downstream of the first branch line 390 and the second branch line 392.

In such embodiments, the first energy storage device 316 and the second energy storage device 322 may be arranged in parallel on the first branch line 390, such that the flow of thermal fluid through the first branch line 390 is partitioned (e.g., evenly partitioned) between the first energy storage device 316 and the second energy storage device 322. Similarly, the first inverter 318 and the second inverter 324 may be arranged in parallel on the second branch line 392, such that the flow of thermal fluid through the second branch line 392 is partitioned (e.g., evenly partitioned) between the first inverter 318 and the second inverter 324. Likewise, the first converter 320 and the second converter 326 may be arranged in parallel on the third branch line 394, such that the flow of thermal fluid through the third branch line 394 is partitioned (e.g., evenly partitioned) between the first converter 320 and the second converter 326.

In the embodiment shown in FIG. 7, the first branch line 390 may be sized larger than the second branch line 392 and the third branch line 394, such that about half of the thermal fluid travels through the first branch line 390. For example, between about 40% and about 60% of the thermal fluid exiting the at least one heat exchanger 334 may travel through the first branch line 390, and between about 20% and about 30% of the thermal fluid exiting the at least one heat exchanger 334 may travel through each of the second branch line 392 and the third branch line 394.

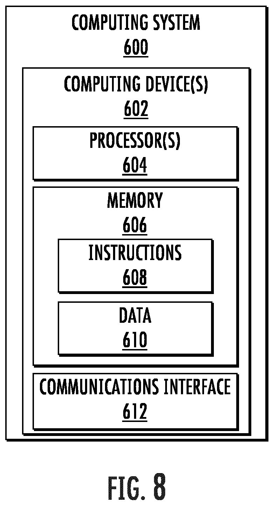

FIG. 8 provides a block diagram of an example computing system 600. The computing system 600 can be used to implement the aspects disclosed herein. The computing system 600 can include one or more computing device(s) 602. The thermal controller 378 and/or the engine controllers 328, 330 described above with reference to FIGS. 3 and 4 may each be constructed and may operate in a same or similar manner as one of the computing devices 602, for example.

As shown in FIG. 8, the one or more computing device(s) 602 can each include one or more processor(s) 604 and one or more memory device(s) 606. The one or more processor(s) 604 can include any suitable processing device, such as a microprocessor, microcontroller, integrated circuit, logic device, or other suitable processing device. The one or more memory device(s) 606 can include one or more computer-readable media, including, but not limited to, non-transitory computer-readable medium or media, RAM, ROM, hard drives, flash drives, and other memory devices, such as one or more buffer devices.

The one or more memory device(s) 606 can store information accessible by the one or more processor(s) 604, including computer-readable or computer-executable instructions 608 that can be executed by the one or more processor(s) 604. The instructions 608 can be any set of instructions or control logic that when executed by the one or more processor(s) 604, cause the one or more processor(s) 604 to perform operations. The instructions 608 can be software written in any suitable programming language or can be implemented in hardware. In some embodiments, the instructions 608 can be executed by the one or more processor(s) 604 to cause the one or more processor(s) 604 to perform operations.

The memory device(s) 606 can further store data 610 that can be accessed by the processor(s) 604. For example, the data 610 can include sensor data such as engine parameters, model data, logic data, etc., as described herein. The data 610 can include one or more table(s), function(s), algorithm(s), model(s), equation(s), etc., according to example embodiments of the present disclosure.

The one or more computing device(s) 602 can also include a communications interface 612 used to communicate, for example, with the other components of the additive manufacturing system. The communications interface 612 can include any suitable components for interfacing with one or more network(s), including, for example, transmitters, receivers, ports, controllers, antennas, or other suitable components.

The technology discussed herein makes reference to computer-based systems and actions taken by and information sent to and from computer-based systems. It will be appreciated that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems.

As described above, the thermal management system of the present disclosure thermally manages the temperature of the power modules associated with two different electric machines simultaneously by configuring the thermal fluid loop in a parallel branch design and by positioning one or more heat exchangers on the thermal fluid loop. Additionally, the thermal controller maintains a desired operating temperature of the various power modules by adjusting an amount of coolant provided to the one or more heat exchangers and/or by adjusting the operation of one or more devices fluidly/thermally coupled to the thermal fluid loop (such as a variable speed coolant pump, a heater, etc.). With the parallel branch design and the thermal controller, specific amounts of the coolant may be provided to specific ones of the one or more devices coupled to the thermal fluid loop, providing more precise control of the temperatures of the one or more devices. Such control improves operation of the electric machines by reducing losses from electrical resistance caused by increasing temperature.

Although specific features of various embodiments may be shown in some drawings and not in others, this is for convenience only. In accordance with the principles of the present disclosure, any feature of a drawing may be referenced and/or claimed in combination with any feature of any other drawing.

Further aspects are provided by the subject matter of the following clauses:

An aircraft system including: an electrified powertrain having a first power module and a second power module; and a thermal management system comprising: a thermal fluid loop for conveying a thermal fluid, wherein the first power module and the second power module are in thermal communication with the thermal fluid loop; and a heat exchanger in thermal communication with the thermal fluid loop upstream of the first power module and the second power module such that the thermal fluid from the heat exchanger is partitioned between the first power module and the second power module.

The aircraft system as in any preceding clause, further including a ram air duct that defines a ram air channel extending from a forward end to an aft end, wherein the heat exchanger is disposed in the ram air channel.

The aircraft system as in any preceding clause, further including a door positioned within the ram air channel forward of the heat exchanger, the door connected to an actuator such that the door is movable between an open position and a closed position within the ram air channel.

The aircraft system as in any preceding clause, further including: a coolant pump disposed on the thermal fluid loop; a heater disposed on the thermal fluid loop; and a thermal controller operably connected to the coolant pump, the heater, and the actuator, the thermal controller having one or more processors configured to: determine a load requirement of one of the first electric machine and the second electric machine; and adjust an operation of at least one of the coolant pump, the heater, or the actuator in response to determining the load requirement.

The aircraft system as in any preceding clause, wherein the first power module is one of a first group of power modules each electrically connected to a first electric machine, wherein the second power module is one of a second group of power modules each electrically connected to a second electric machine.

The aircraft system as in any preceding clause, wherein the first group of power modules include a first energy storage device, a first inverter, and a first converter each disposed on the thermal fluid loop, and wherein the second group of power modules include a second energy storage device, a second inverter, and a second converter each disposed on the thermal fluid loop.

The aircraft system as in any preceding clause, wherein the first inverter and the first converter are in a parallel arrangement on the thermal fluid loop downstream of the first energy storage device, and wherein the second inverter and the second converter are in a parallel arrangement on the thermal fluid loop downstream of the second energy storage device.

The aircraft system as in any preceding clause, wherein the first electric machine is disposed in thermal communication on the thermal fluid loop downstream of the first inverter and the first converter, and wherein the second electric machine is disposed in thermal communication on the thermal fluid loop downstream of the second inverter and the second converter.

The aircraft system as in any preceding clause, further including a coolant pump fluidly connected to the thermal fluid loop upstream of the heat exchanger.

The aircraft system as in any preceding clause, wherein the heat exchanger is a first heat exchanger, and wherein the system further includes a second heat exchanger arranged in parallel with the first heat exchanger on the thermal fluid loop.

The aircraft system as in any preceding clause, further including a storage tank and a heater, the heater in thermal communication with the storage tank, and the storage tank disposed on the thermal fluid loop upstream of the heat exchanger.

The aircraft system as in any preceding clause, further including a storage tank and a heater, the heater in thermal communication with the storage tank, and the storage tank disposed on the thermal fluid loop downstream of the heat exchanger.

An aircraft including: a first hybrid-electric engine having a first electric machine; a second hybrid-electric engine having as second electric machine; an electrified powertrain having a first power module electrically connected to the first electric machine and a second power module electrically connected to the second electric machine; and a thermal management system comprising: a thermal fluid loop for conveying a thermal fluid, wherein the first power module and the second power module are in thermal communication with the thermal fluid loop; and a heat exchanger in thermal communication with the thermal fluid loop upstream of the first power module and the second power module such that the thermal fluid from the heat exchanger is partitioned between the first power module and the second power module.

The aircraft as in any preceding clause, further including a ram air duct that defines a ram air channel extending from a forward end to an aft end, wherein the heat exchanger is disposed in the ram air channel.

The aircraft as in any preceding clause, further including a door positioned within the ram air channel forward of the heat exchanger, the door connected to an actuator such that the door is movable between an open position and a closed position within the ram air channel.

The aircraft as in any preceding clause, further including: a coolant pump disposed on the thermal fluid loop; a heater disposed on the thermal fluid loop; and a thermal controller operably connected to the coolant pump, the heater, and the actuator, the thermal controller having one or more processors configured to: determine a load requirement of one of the first electric machine and the second electric machine; and adjust an operation of at least one of the coolant pump, the heater, or the actuator in response to determining the load requirement.

The aircraft as in any preceding clause, wherein the first power module is one of a first group of power modules each electrically connected to a first electric machine, wherein the second power module is one of a second group of power modules each electrically connected to a second electric machine.

The aircraft as in any preceding clause, wherein the first group of power modules include a first energy storage device, a first inverter, and a first converter each disposed on the thermal fluid loop, and wherein the second group of power modules include a second energy storage device, a second inverter, and a second converter each disposed on the thermal fluid loop.

The aircraft as in any preceding clause, wherein the first inverter and the first converter are in a parallel arrangement on the thermal fluid loop downstream of the first energy storage device, and wherein the second inverter and the second converter are in a parallel arrangement on the thermal fluid loop downstream of the second energy storage device.

The aircraft as in any preceding clause, further including a coolant pump fluidly connected to the thermal fluid loop upstream of the heat exchanger.

A thermal management system includes a thermal fluid loop for conveying a thermal fluid, wherein a first power module and a second power module are in thermal communication with the thermal fluid loop, and a heat exchanger in thermal communication with the thermal fluid loop upstream of the first power module and the second power module such that the thermal fluid from the heat exchanger is partitioned between the first power module and the second power module.

The thermal management system as in any preceding clause, further including a thermal controller operably connected to the coolant pump, the heater, and the actuator, the thermal controller having one or more processors configured to: determine a load requirement of one of a first electric machine and a second electric machine and adjust an operation of at least one of the coolant pump, the heater, and or actuator in response to determining the load requirement.

The thermal management system as in any preceding clause, wherein the heat exchanger is a first heat exchanger, and wherein the thermal management system further includes a second heat exchanger arranged in parallel with the first heat exchanger on the thermal fluid loop.

The thermal management system as in any preceding clause, further including a coolant pump fluidly connected to the thermal fluid loop upstream of the heat exchanger.

A method includes determining a load requirement of one of a first electric machine and a second electric machine and adjusting an operation of at least one of a coolant pump, a heater, or an actuator in response to determining the load requirement.

The method as in any preceding clause, wherein determining the load requirement includes receiving the load requirement from an engine controller.

A thermal controller is configured to determine a load requirement of one of a first electric machine and a second electric machine and adjust an operation of at least one of a coolant pump, a heater, or an actuator in response to determining the load.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An aircraft system (101) comprising:
an electrified powertrain (302) having a first power module (312) and a second power module (314); and
a thermal management system (300) comprising:
a thermal fluid loop (332) for conveying a thermal fluid, wherein the first power module (312) and the second power module (314) are in thermal communication with the thermal fluid loop (332); and
a heat exchanger (334) in thermal communication with the thermal fluid loop (332) upstream of the first power module (312) and the second power module (314) such that the thermal fluid from the heat exchanger (334) is partitioned between the first power module (312) and the second power module (314).

2. The aircraft system (101) as in claim 1, further comprising a ram air duct (104) that defines a ram air channel (106, 112) extending from a forward end to an aft end (110, 118), wherein the heat exchanger (334) is disposed in the ram air channel (106, 112).

3. The aircraft system (101) as in claim 2, further comprising a door (384) positioned within the ram air channel (106, 112) forward of the heat exchanger (334), the door (384) connected to an actuator (386) such that the door (384) is movable between an open position and a closed position within the ram air channel (106, 112).

4. The aircraft system (101) as in claim 3, further comprising:
a coolant pump (336) disposed on the thermal fluid loop (332);
a heater (344) disposed on the thermal fluid loop (332); and
a thermal controller (378) operably connected to the coolant pump (336), the heater (344), and the actuator (386), the thermal controller (378) having one or more processors configured to:
determine a load requirement of one of the first electric machine (164, 308) and the second electric machine (174, 308, 310); and
adjust an operation of at least one the coolant pump (336), the heater (344), and the actuator (386) in response to determining the load requirement.

5. The aircraft system (101) as in any of claims 1 to 4, wherein the first power module (312) is one of a group of first power modules (312) each electrically connected to a first electric machine (164, 308), wherein the second power module (314) is one of a group of second power modules (314) each electrically connected to a second electric machine (174, 308, 310).

6. The aircraft system (101) as in claim 5, wherein the first group of power modules include a first energy storage device (316), a first inverter (318) (318), and a first converter (320) each disposed on the thermal fluid loop (332), and wherein the second group of power modules include a second energy storage device (322), a second inverter (324)inverter (318), and a second converter (326) each disposed on the thermal fluid loop (332).

7. The aircraft system (101) as in claim 6, wherein the first inverter (318) (318) and the first converter (320) are in a parallel arrangement on the thermal fluid loop (332) downstream of the first energy storage device (316), and wherein the second inverter (324)inverter (318) and the second converter (326) are in a parallel arrangement on the thermal fluid loop (332) downstream of the second energy storage device (322).

8. The aircraft system (101) as in claim 7, wherein the first electric machine (164, 308) is disposed in thermal communication on the thermal fluid loop (332) downstream of the first inverter (318) (318) and the first converter (320), and wherein the second electric machine (174, 308, 310) is disposed in thermal communication on the thermal fluid loop (332) downstream of the second inverter (324)inverter (318) and the second converter (326).

9. The aircraft system (101) as in any of claims 1 to 8, further comprising a coolant pump (336) fluidly connected to the thermal fluid loop (332) upstream of the heat exchanger (334).

10. The aircraft system (101) as in any of claims 1 to 9, wherein the heat exchanger (334) is a heat exchanger (334)first heat exchanger (334) (350, 352), and wherein the system further includes a second heat exchanger (352)heat exchanger (334) arranged in parallel with the heat exchanger (334)first heat exchanger (334) (350, 352) on the thermal fluid loop (332).

11. The aircraft system (101) as in any of claims 1 to 10, further comprising a storage tank (338) and a heater (344), the heater (344) in thermal communication with the storage tank (338), and the storage tank (338) disposed on the thermal fluid loop (332) upstream of the heat exchanger (334).

12. The aircraft system (101) as in any of claims 1 to 11, further comprising a storage tank (338) and a heater (344), the heater (344) in thermal communication with the storage tank (338), and the storage tank (338) disposed on the thermal fluid loop (332) downstream of the heat exchanger (334).

13. An aircraft comprising:
a first hybrid-electric engine having a first electric machine (164, 308);
a second hybrid-electric engine having as second electric machine (174, 308, 310);
an electrified powertrain (302) having a first power module (312) electrically connected to the first electric machine (164, 308) and a second power module (314) electrically connected to the second electric machine (174, 308, 310); and
a thermal management system (300) comprising:
a thermal fluid loop (332) for conveying a thermal fluid, wherein the first power module (312) and the second power module (314) are in thermal communication with the thermal fluid loop (332); and
a heat exchanger (334) in thermal communication with the thermal fluid loop (332) upstream of the first power module (312) and the second power module (314) such that the thermal fluid from the heat exchanger (334) is partitioned between the first power module (312) and the second power module (314).

14. The aircraft as in claim 13, further comprising a ram air duct (104) that defines a ram air channel (106, 112) extending from a forward end to an aft end (110, 118), wherein the heat exchanger (334) is disposed in the ram air channel (106, 112).

15. The aircraft as in claim 14, further comprising a door (384) positioned within the ram air channel (106, 112) forward of the heat exchanger (334), the door (384) connected to an actuator (386) such that the door (384) is movable between an open position and a closed position within the ram air channel (106, 112).
